# EUROPEAN PATENT APPLICATION

(11) **EP 4 741 897 A1**
(43) Date of publication of application: **13.05.2026**
(21) Application number: 25214000.9
(22) Date of filing: 06.11.2025
(51) Int. Cl.: G02B 6/38, G02B 6/42, G02B 6/43, G02B 6/44

(54) **ACTIVE ELECTRO-OPTICAL CABLE ASSEMBLY FOR HIGH-DENSITY DATA TRANSMISSION SYSTEMS**

(30) Priority: 07.11.2024 US 202463717500 P; 04.11.2025 US 202519379357
(71) Applicant: II-VI Delaware, Inc., Wilmington, DE 19890 (US)
(72) Inventor: CHEN, Young-Kai, Wilmington, 19890 (US); TATARCZAK, Anna, Wilmington, 19890 (US); NELSON, Stephen, Wilmington, 19890 (US)
(74) Representative: Schmidt, Christian

(57) **Abstract**

Systems and methods are provided for active electro-optical cable assemblies for high-density data transmission systems. An active electro-optical cable assembly may include comprises multi-lane copper cable array assemblies connected to small form factor connectors at a processing unit. At the end of the copper cable arrays, an electro-optical component may be used to convert electrical signals into optical signals. The optical signals may be coupled, via a fiber connector, to optical fibers. The optical fibers may be terminated with a multi-fiber push on connector for pluggable or pigtailed connections.

## Description

### CLAIM OF PRIORITY

This patent application claims priority to and claims benefit from United States Provisional Patent Application Serial No. 63/717,500, filed on November 7, 2025. The above identified application is hereby incorporated herein by reference in its entirety.

### TECHNICAL FIELD

Aspects of the present disclosure relate to optical communication related solutions. More specifically, certain implementations of the present disclosure relate to methods and systems for implementing and utilizing active electro-optical cable assemblies for high-density data transmission systems.

### BACKGROUND

Limitations and disadvantages of conventional solutions for handling optical signals, and in particular cable assemblies for use in data transmission systems, will become apparent to one of skill in the art, through comparison of such systems with some aspects of the present disclosure as set forth in the remainder of the present application with reference to the drawings.

### BRIEF SUMMARY

System and methods are provided for active electro-optical cable assemblies for high-density data transmission systems, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF THE DRAWINGS

Fig. 1 illustrates an example active electro-optical cable assembly with optical fibers in a parallel optics configuration, in accordance with various example implementations of this disclosure.
Fig. 2 illustrates an example active electro-optical cable assembly that uses optical fibers in a wavelength-division multiplexing (WDM) optics configuration, in accordance with various example implementations of this disclosure.
Fig. 3 illustrates an example active electro-optical cable assembly that uses both a parallel optics configuration and a WDM optics configuration, in accordance with various example implementations of this disclosure.
Fig. 4 illustrates an example active electro-optical cable assembly that uses a pluggable 2D connector plugged on the top of the substrate, in accordance with various example implementations of this disclosure.
Fig. 5 illustrates an example active electro-optical cable assembly that uses a pluggable 2D connector plugged on the bottom of the substrate, in accordance with various example implementations of this disclosure.
Fig. 6 illustrates an example active electro-optical cable assembly that uses an alternative pluggable 2D connector plugged on the bottom of the substrate, in accordance with various example implementations of this disclosure.
Fig. 7 illustrates different example connector and electro-optical (E/O) array layouts, in accordance with various example implementations of this disclosure.

### DETAILED DESCRIPTION

The present disclosure relates to the field of optical communications and high-speed data transmissions. In particular, solutions based on the present disclosure are directed to new and improved components for use in high-speed data transmission systems. In this regard, current systems and methods for high-speed data transmission (e.g., in data centers) may use transceivers for converting electrical signals to optical signals. However, current transceivers and use thereof may have some limitations and/or pose some challenges. For example, because these transceivers require energy-consuming re-timers and digital signal processors (DSPs) to manage signal integrity and transmission speeds, current approaches add latency, power consumption and complexity.

Emerging solutions, such as Co-Packaged Optics (CPO) and Near-Packaged Optics (NPO), attempt to address these limitations and/or challenges by integrating optical components more closely with processing components, such as a graphics processing unit (GPU) or application-specific integrated circuit (ASIC), to increase bandwidth. However, such CPO and NPO systems introduce new constraints. For example, CPO and NPO systems may operate in thermally harsh environments that place a considerable burden on optical components, reducing reliability and performance. Additionally, CPO and NPO designs may require high-speed electrical vias in the substrates, adding substantial complexity to integration processes and increasing production costs.

The present disclosure is directed to improving high-speed data transmission systems, particularly by providing new designs, for use in transceivers utilized in facilitating and/or supporting high-speed data transmission, which overcome at least some of limitations and/or challenges associated with current designs. In particular, in various embodiments based on the present disclosure, active electro-optical cable assemblies that overcome these limitations and/or challenges are provided, being configured to enable a modular, efficient and flexible data transfer pathway.

An example active electro-optical cable assembly may comprise a multi-lane copper cable assembly (or "copper cable array") connected to one or more small form factor connectors at a processing component (e.g., ASIC or GPU), enabling transmitting of data via electrical signals over short distances. At the end of the copper cable array, an electro-optical (E/O) component is used to convert the electrical signals into optical signals, which are then transmitted over optical fiber, typically terminated with a Multi-Fiber Push On (MPO) connector on the front panel. Such modular design allows for flexible configurations, such as pluggable or pigtailed connections, which improves thermal management by removing E/O components from high-heat environments and facilitating easy system maintenance and upgrades, while maintaining high-density beachfront near the processing component. In this regard, by converting electrical signals to optical signals directly at the cable level and using optical fiber for transmission, the active electro-optical cable assembly solution alleviates size and thermal constraints associated with data transfer to and from the processing component (e.g., ASIC or GPU). This approach allows the optics to be situated in a less thermally stringent environment, which may enhance reliability while providing a pluggable, replaceable and easy-to-integrate solution compared to existing CPO and NPO designs.

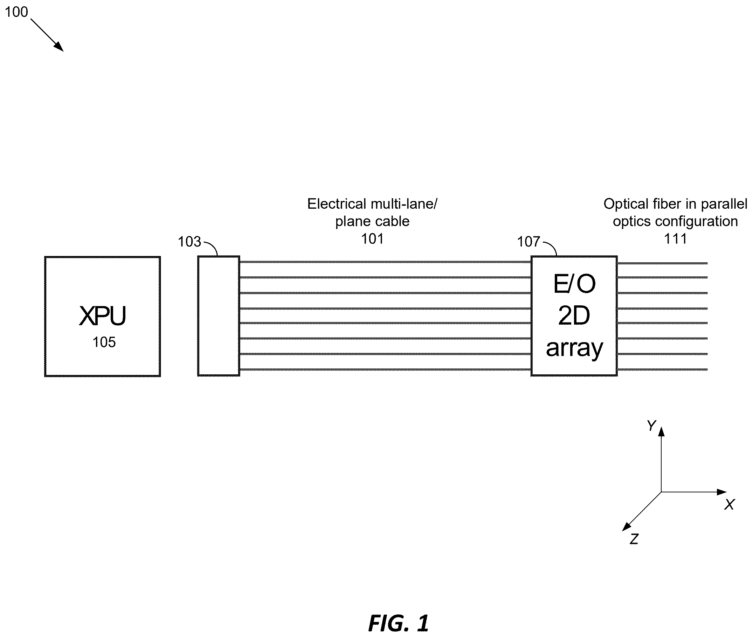

Example embodiments incorporating such active electro-optical cable structures, and features and details relating thereto, are described in more detail with respect to Figs. 1-7.

Fig. 1 illustrates an example active electro-optical cable assembly with optical fibers in a parallel optics configuration, in accordance with various example implementations of this disclosure.

Shown in Fig. 1 is a top view of an active electro-optical cable assembly 100 that is configured to provide a compact, modular solution for high-speed data transfer. The active electro-optical cable assembly 100 comprises a multi-lane copper cable assembly 101 (also referred to as "copper cable array 101") connected to small form factor connector 103 at the ASIC or GPU ("XPU") 105. The copper cable array 101 is operable to transmit data via electrical signals over short distances. The connector 103 may comprise an electrical pluggable connector that is clamped down to engage the copper cable array 101.

At the distal end of the copper cable array 101, an electro-optical (E/O) component 107 is operable to convert the electrical signals into optical signals. In this regard, the E/O component 107 comprises suitable circuitry and/or hardware resources for converting each electrical signal to an optical signal. The E/O component 107 may comprise vertical-cavity surface-emitting lasers (VCSELs), indium phosphide (InP) devices or silicon photonics (SiP) elements, optionally with integrated lasers.

The optical signals may be coupled (e.g., via a fiber connector) to optical fiber (e.g., single-mode (SM) fiber, multimode (MM) fiber, multimode (MM) fiber bunch, multi-core fiber, etc.). In the implementation illustrated in Fig. 1, the E/O component 107 is connected to optical fibers in parallel optics configuration. In this regard, as shown in Fig. 1, in the active electro-optical cable assembly 100, the E/O component 107 is coupled (e.g., via a fiber connector) to optical fiber 111, via parallel optical connections. The optical fiber 111 may be terminated with a multi-fiber push on (MPO) connector on a front panel of a device.

The active electro-optical cable assembly 100 comprises small form factor electrical connector(s) 103 at the XPU 105, providing a multi-lane connection via the copper cable array 101 for short-range, high-speed data transfer. The proximity of these connections minimizes signal loss and enables a high-density configuration.

The copper cable array 101 is designed to support a 1D or 2D multilayer structure and is positioned close to the XPU 105. Cable lengths may range from a few centimeters to one meter or more, depending on signal integrity and/or link budget requirements of the system. The copper cable array 101 may be reconnectable or permanently assembled to the electrical interface at the connector(s) 103.

The E/O component 107 may be configured in a 1D or 2D arrangement, depending on system requirements. The E/O component 107 may be connected to either single fiber or multimode fiber, with configurations supporting multi-core or separate fibers. This allows for pluggable or pigtailed connections with MPO or similar connectors on the front panel, enhancing adaptability and ease of integration. As noted above, in the active electro-optical cable assembly 200, connections to optical fibers are done using a parallel optics configuration.

The modular design used in the active electro-optical cable assembly 100 allows for flexible configurations, such as pluggable or pigtailed connections, which improve thermal management by removing E/O components 107 from high-heat environments and facilitating easy system maintenance and upgrades, while maintaining high-density beachfront near the XPU 105.

While in the implementation illustrated in Fig. 1 a single data transmission path (the connector 103, the copper cable array 101, the E/O component 107, and the optical fiber 111) is used in the active electro-optical cable assembly 100, the disclosure is not so limited, and as such, in some implementations, multiple paths, each similar to the one shown in Fig. 1, may be coupled to and used by a single processing unit (e.g., the XPU 105).

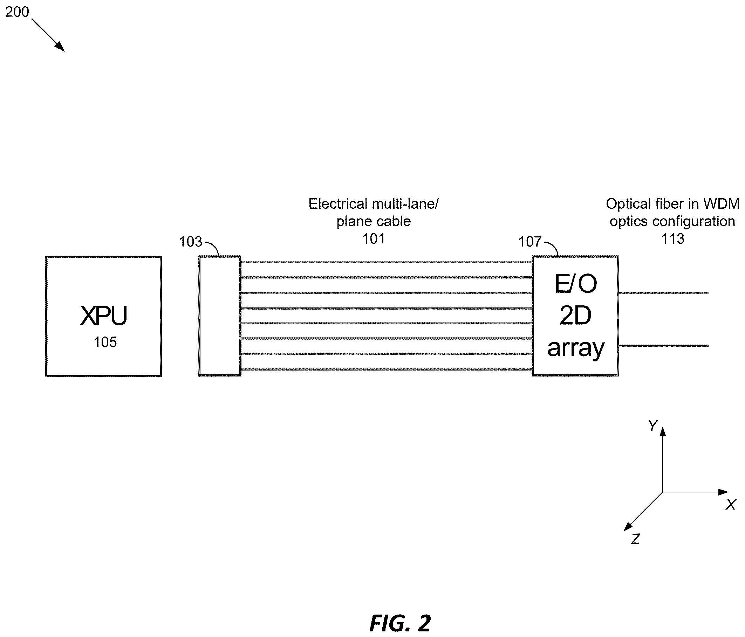

Fig. 2 illustrates an example active electro-optical cable assembly that uses optical fibers in a wavelength-division multiplexing (WDM) optics configuration, in accordance with various example implementations of this disclosure.

Shown in Fig. 2 is a top view of an active electro-optical cable assembly 200 that is configured to provide a compact, modular solution for high-speed data transfer. The active electro-optical cable assembly 200 comprises multi-lane copper cable assembly 101 (also referred to as "copper cable array 101") connected to small form factor connector 103 at the ASIC or GPU ("XPU") 105. The copper cable array 101 is operable to transmit data via electrical signals over short distances. The connector 103 may comprise an electrical pluggable connector that is clamped down to engage the copper cable array 101.

At the distal end of the copper cable array 101, an electro-optical (E/O) component 107 is operable to convert the electrical signals into optical signals. In this regard, the E/O component 107 comprises suitable circuitry and/or hardware resources for converting each electrical signal to an optical signal. The E/O component 107 may comprise vertical-cavity surface-emitting lasers (VCSELs), indium phosphide (InP) devices or silicon photonics (SiP) elements, optionally with integrated lasers.

The optical signals provided by the E/O component 107 may be coupled (e.g., via a fiber connector) to optical fiber (e.g., single-mode (SM) fiber, multimode (MM) fiber, MM fiber bunch, multi-core fiber, etc.). In the implementation illustrated. In the implementation illustrated in Fig. 2, the E/O component 107 is connected to optical fibers in wavelength-division multiplexing (WDM) optics configuration. In this regard, the E/O component 107 may be coupled (e.g., via a fiber connector) in the active electro-optical cable assembly 200 to optical fiber 113.

The optical signals may be coupled (e.g., via a fiber connector) to optical fiber. In the implementation illustrated in Fig. 2, the E/O component 107 is connected to optical fibers in a wavelength-division multiplexing (WDM) optics configuration. In this regard, as shown in Fig. 2, in the active electro-optical cable assembly 200, the E/O component 107 is coupled (e.g., via a fiber connector) to optical fiber 113, via WDM based connections. Thus, there may be fewer optical fibers than electrical connections (wires) in the copper cable array 101, and as such, multiple electrical signals may be multiplexed onto a single optical fiber. The optical fiber 113 may be terminated with a multi-fiber push on (MPO) connector on a front panel of a device.

The active electro-optical cable assembly 200 comprises small form factor electrical connector(s) 103 at the XPU 105, providing a multi-lane connection via the copper cable array 101 for short-range, high-speed data transfer. The proximity of these connections minimizes signal loss and enables a high-density configuration.

The copper cable array 101 is designed to support a 1D or 2D multilayer structure and is positioned close to the XPU 105. Cable lengths may range from a few centimeters to one meter or more, depending on the signal integrity and/or link budget requirements of the system. The copper cable array 101 may be reconnectable or permanently assembled to the electrical interface at the connector(s) 103.

The E/O component 107 may be configured in a 1D or 2D arrangement, depending on system requirements. The E/O components 107 may be connected to either single fiber or multimode fiber, with configurations supporting multi-core or separate fibers. This allows for pluggable or pigtailed connections with MPO or similar connectors on the front panel, enhancing adaptability and ease of integration. As noted above, in the active electro-optical cable assembly 200, connections to optical fibers are done using WDM optics configuration.

The modular design used in the active electro-optical cable assembly 200 allows for flexible configurations, such as pluggable or pigtailed connections, which improve thermal management by removing E/O components 107 from high-heat environments and facilitating easy system maintenance and upgrades, while maintaining high-density beachfront near the XPU 105.

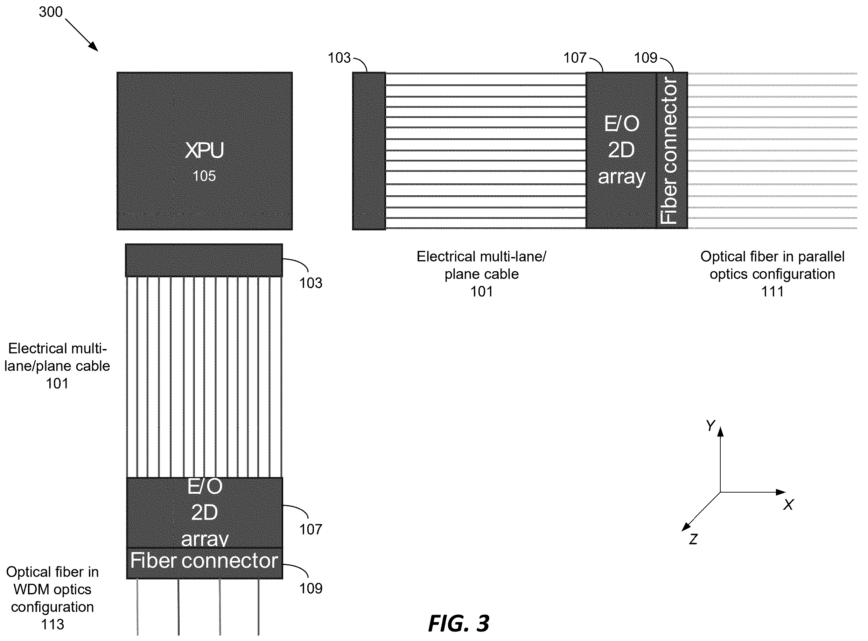

While in the implementation illustrated in Fig. 2 a single data transmission path (the connector 103, the copper cable array 101, the E/O component 107, and the optical fiber 113) is used in the active electro-optical cable assembly 200, the disclosure is not so limited, and as such, in some implementations, multiple paths, each similar to the one shown in Fig. 2, may be coupled to and used by a single processing unit (e.g., the XPU 105). Further, in some instances, when different paths are used, these paths may be configured differently. For example, in some implementations, an active electro-optical cable assembly may incorporate one or more paths utilizing parallel optics configuration and one or more paths utilizing wavelength-division multiplexing (WDM) optics configuration. An example of such implementation is illustrated in Fig. 3.

Fig. 3 illustrates an example active electro-optical cable assembly that uses both a parallel optics configuration and a WDM optics configuration, in accordance with various example implementations of this disclosure.

Shown in Fig. 3 is a top view of an active electro-optical cable assembly 300 that is configured to provide a compact, modular solution for high-speed data transfer. The active electro-optical cable assembly 300 comprises multi-lane copper cable assemblies 101 (also referred to as "copper cable arrays 101") connected to small form factor connectors 103 at the ASIC or GPU ("XPU") 105. The copper cable array 101 is operable to transmit data via electrical signals over short distances. The connectors 103 may comprise electrical pluggable connectors that are clamped down to engage the copper cable arrays 101. At the end of each of the copper cable arrays 101, an electro-optical (E/O) component 107 is operable to convert these signals into optical signals. In this regard, in the implementation illustrated in Fig. 3, a combination of parallel optics configuration(s) and a wavelength-division multiplexing (WDM) optics configuration are used-that is, with one or more E/O components 107 connected to optical fibers in a parallel optics configuration, and one or more E/O components 107 connected to optical fibers in a WDM optics configuration, as shown.

The optical signals may be coupled, via a fiber connector 109, to optical fiber 111, 113 (e.g., single-mode (SM) fiber, multimode (MM) fiber, MM fiber bunch, multi-core fiber, etc.). For example, the optical fiber 111, 113 may be terminated with a multi-fiber push on (MPO) connector 109 on a front panel of a device. This modular design allows for flexible configurations, such as pluggable or pigtailed connections, which improve thermal management by removing E/O components 107 from high-heat environments and facilitating easy system maintenance and upgrades, while maintaining high-density beachfront near the XPU 105.

The active electro-optical cable assembly 300 comprises small form factor electrical connectors 103 at the XPU 105, providing a connection, via the copper cable array 101, for short-range, high-speed data transfer. The proximity of these connections 103 minimizes signal loss and enables a high-density configuration.

The copper cable arrays 101 may be designed to support a 1D or 2D multilayer structure and is positioned close to the XPU 105. Cable lengths may range from a few centimeters to one meter or more, depending on the signal integrity and/or link budget requirements of the system. The copper cable arrays 101 may be reconnectable or permanently assembled to the electrical interface at the connector(s) 103.

At the distal end of each of the copper cable arrays 101, the E/O component 107 converts the electrical signal to an optical signal. As noted, this component may include vertical-cavity surface-emitting lasers (VCSELs), indium phosphide (InP) devices or silicon photonics (SiP) elements, optionally with integrated lasers.

The E/O components 107 may be configured in a 1D or 2D arrangement, depending on system requirements. The E/O components 107 may be connected to either single or multimode optical fiber 111, 113, with configurations supporting multi-core or separate fibers. This allows for pluggable or pigtailed connections 109 with MPO or similar connectors on the front panel, enhancing adaptability and ease of integration.

By placing the E/O component(s) 107 outside the thermally demanding environment near the XPU 105, each of active electro-optical cable assemblies 100, 200, 300 reduces the thermal load on the optical fiber 111, 113, allowing for enhanced reliability and performance.

The modular design used in active electro-optical cable assemblies implemented based on the present disclosure (e.g., the active electro-optical cable assemblies 100, 200, 300) enables easy replacement and reconfiguration of the active electro-optical cable assemblies. The E/O component(s) 107 may be integrated with cooling infrastructure of the system, such as a cold plate, using an integrated heat sink.

Unlike traditional CPO systems, in active electro-optical cable assemblies implemented based on the present disclosure (e.g., the active electro-optical cable assemblies 100, 200, 300), the optical fiber 111, 113 are placed outside the high-heat vicinity of processing units 105, resulting in increased optical component reliability and performance.

Further, the design used in active electro-optical cable assemblies implemented based on the present disclosure (e.g., the active electro-optical cable assemblies 100, 200, 300) offers various fiber pluggability options, enabling adaptability in system design, maintenance and upgrade processes. This pluggability supports configurations compatible with parallel optical setups or wavelength-division multiplexing (WDM). Also, by bypassing the use of PCBs or other substrate traces, the direct E/O conversion, via the E/O component(s) 107, eliminates intermediary transmission pathways, reducing signal degradation and energy requirements.

In some instances, for ease of installation and maintenance, the active electro-optical cable assemblies 100, 200, 300 may use color-coded connectors to denote specific optical specifications, such as WDM or parallel optical capabilities.

As such, active electro-optical cable assemblies implemented based on the present disclosure (e.g., the active electro-optical cable assemblies 100, 200, 300) may provide a modular, thermally efficient solution for data transmission by enabling high-speed electro-optical conversion with enhanced pluggability, reliability and installation ease. The active electro-optical cable assemblies 100, 200, 300 may address the limitations of current transceiver and CPO/NPO designs by reducing the thermal and size constraints on high-speed data transfer to and from processing units 105, maintaining a high-density beachfront and providing a more adaptable and thermally managed pathway for high-density data transmission systems.

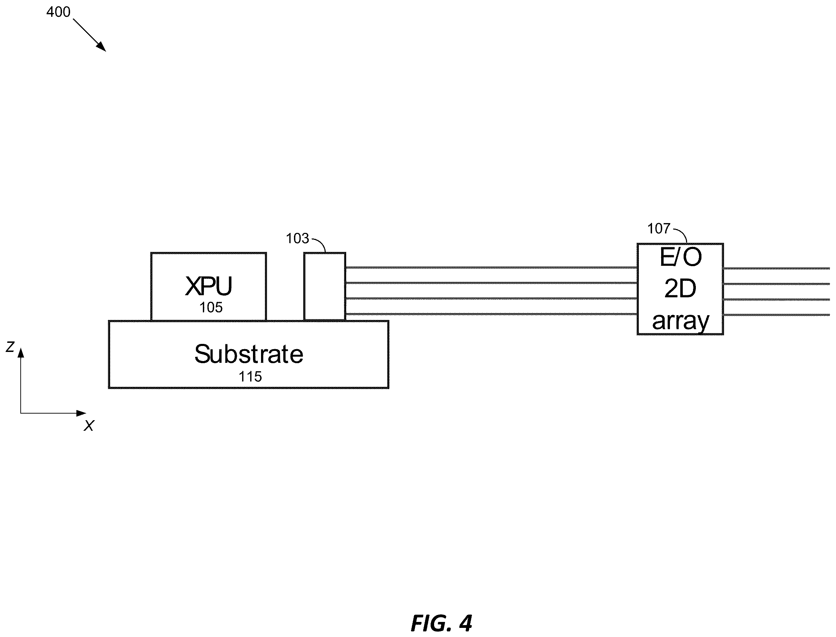

Fig. 4 illustrates an example active electro-optical cable assembly that uses a pluggable 2D connector plugged on the top of the substrate, in accordance with various example implementations of this disclosure.

Shown in Fig. 4 is a side view of an active electro-optical cable assembly 400 that is configured to provide a compact, modular solution for high-speed data transfer. In this regard, the active electro-optical cable assembly 400 is substantially similar to any of the active electro-optical cable assemblies 100, 200, 300, and may operate in substantially similar manner.

As shown in Fig. 4, the active electro-optical cable assembly 400 comprises an ASIC or GPU ("XPU") 105 coupled to a connector 103, which may comprise an electrical pluggable connector that is clamped down to engage a multi-lane copper cable assembly (or "copper cable array") that is configured to carry electrical signals. The copper cable array is connected at the distal end to an electro-optical (E/O) component 107 that is operable to convert electrical signals carried via the into optical signals.

In the example implementation illustrated in Fig. 4, the XPU 105 is disposed on top of a substrate 115, with the pluggable 2D connector 103 plugged on top of the substrate 115, located next to the XPU 105, as shown.

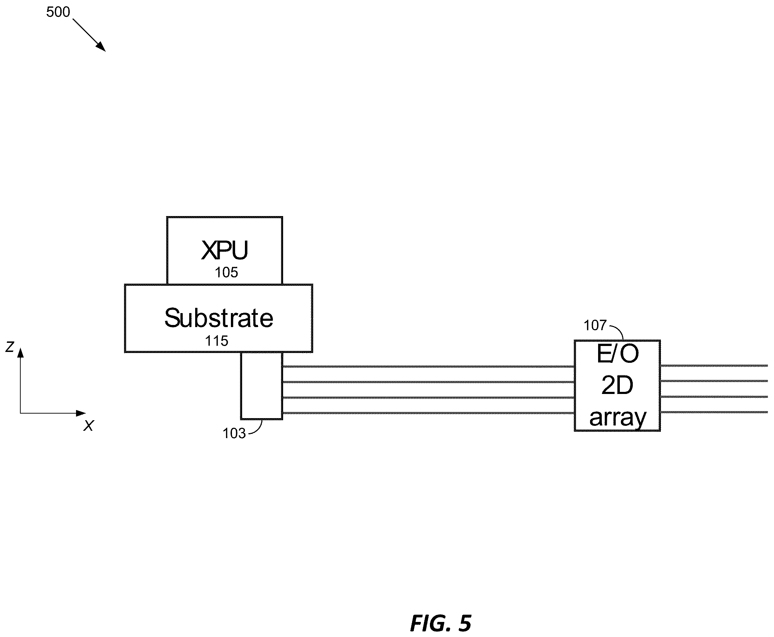

Fig. 5 illustrates an example active electro-optical cable assembly that uses a pluggable 2D connector plugged on the bottom of the substrate, in accordance with various example implementations of this disclosure.

Shown in Fig. 5 is a side view of an active electro-optical cable assembly 500 that is configured to provide a compact, modular solution for high-speed data transfer. In this regard, the active electro-optical cable assembly 500 is substantially similar to any of the active electro-optical cable assemblies 100, 200, 300, and may operate in substantially similar manner.

As shown in Fig. 5, the active electro-optical cable assembly 500 comprises an ASIC or GPU ("XPU") 105 coupled to a connector 103, which may comprise an electrical pluggable connector that is clamped down to engage a multi-lane copper cable assembly (or "copper cable array") that is configured to carry electrical signals. The copper cable array is connected at the distal end to an electro-optical (E/O) component 107 that is operable to convert electrical signals carried via the copper cable array into optical signals.

In the example implementation illustrated in Fig. 5, the XPU 105 is disposed on top of a substrate 115, with the pluggable 2D connector 103 plugged on the bottom of the substrate 115, located below the XPU 105, as shown. In this regard, connection between XPU 105 and the substrate 115 may be done through vias.

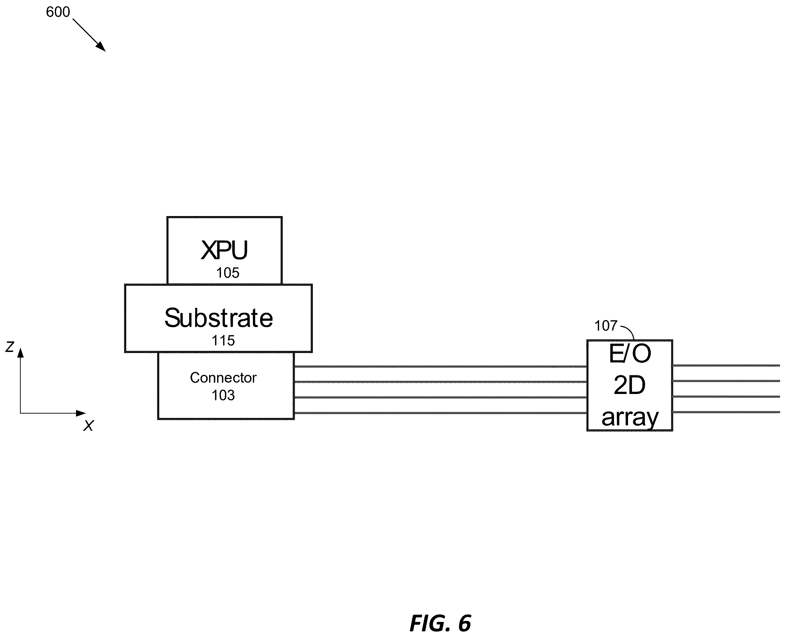

Fig. 6 illustrates an example active electro-optical cable assembly that uses an alternative pluggable 2D connector plugged on the bottom of the substrate, in accordance with various example implementations of this disclosure.

Shown in Fig. 5 is a side view of an active electro-optical cable assembly 500 that is configured to provide a compact, modular solution for high-speed data transfer. In this regard, the active electro-optical cable assembly 500 is substantially similar to any of the active electro-optical cable assemblies 100, 200, 300, and may operate in substantially similar manner.

As shown in Fig. 5, the active electro-optical cable assembly 500 comprises an ASIC or GPU ("XPU") 105 coupled to a connector 103, which may comprise an electrical pluggable connector that is clamped down to engage a multi-lane copper cable assembly (or "copper cable array") that is configured to carry electrical signals. The copper cable array is connected at the distal end to an electro-optical (E/O) component 107 that is operable to convert electrical signals carried via the into optical signals.

In the example implementation illustrated in Fig. 5, the XPU 105 is disposed on top of a substrate 115, with the pluggable 2D connector 103 plugged on the bottom of the substrate 115, located below the XPU 105 and extending underneath the XPU 105, as shown. In this regard, connection between XPU 105 and the substrate 115 may be done through vias.

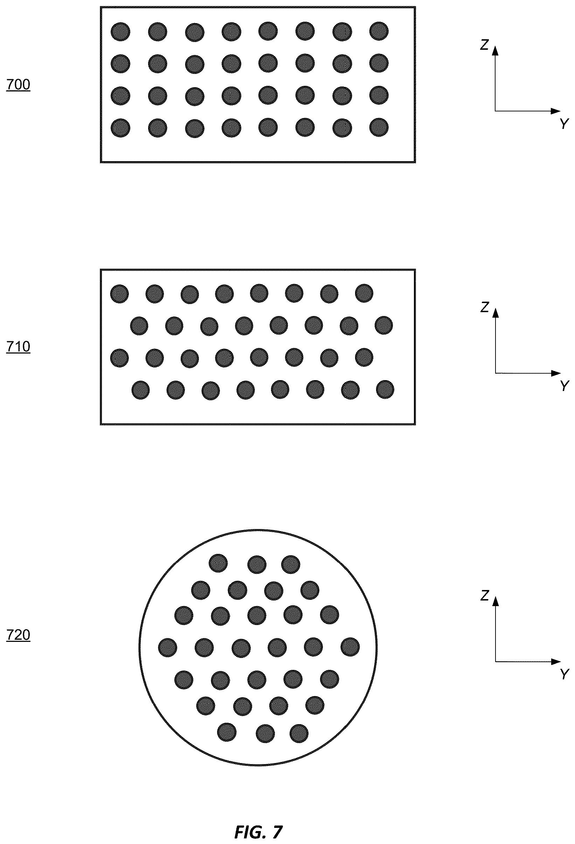

Fig. 7 illustrates different example connector and electro-optical (E/O) array layouts, in accordance with various example implementations of this disclosure.

Shown in Fig. 7 are example connector and electro-optical (E/O) array layouts 700, 710, 720. In this regard, each of these layouts may be used in any of the connector and electro-optical (E/O) components described herein-e.g., the E/O components 107. For example, the E/O array layout 700 may be a 2D aligned rectangular layout, comprising rows of connection points in an aligned layout-e.g., comprising 32 connection points in a 2D arrangement of 4 rows of 8 connections in an aligned (ortholinear) layout, as shown. The E/O array layout 710 may be a 2D staggered rectangular layout, comprising rows of connection points in a staggered layout-e.g., comprising 32 connection points in a 2D arrangement of 4 rows of 8 connections in a staggered layout, as shown. The E/O array layout 720 may be a 2D staggered circular (or hexagonal) layout-e.g., comprising 30 connection points in a staggered arrangement fitting within a circular cross-section, as shown.

An example system, in accordance with the present disclosure, comprises one or more active electro-optical cable assemblies, wherein each active electro-optical cable assembly comprises a small form factor connector configured to engage a processing unit; a multi-lane cable configured for carrying a plurality of electrical signals; and an electro-optical component configured to convert the plurality of electrical signals to optical signals; wherein the multi-lane cable is connected at one end to the small form factor connector and to the electro-optical component on the other end; and wherein the electro-optical component is connected to an optical fiber for coupling the optical signals to the optical fiber.

In an example embodiment, a multi-lane cable comprises a multi-lane copper cable array.

In an example embodiment, each active electro-optical cable assembly further comprises a fiber connector configured for connecting the electro-optical component to the optical fiber.

In an example embodiment, the electro-optical component is connected to the optical fiber using parallel optics configuration.

In an example embodiment, the electro-optical component is connected to the optical fiber using wavelength-division multiplexing (WDM) optics configuration.

In an example embodiment, the system comprises, at least, a first active electro-optical cable assembly and a second active electro-optical cable assembly, wherein the electro-optical component in the first active electro-optical cable assembly is connected to the optical fiber using parallel optics configuration, and wherein the electro-optical component in the second active electro-optical cable assembly is connected to the optical fiber using wavelength-division multiplexing (WDM) optics configuration.

In an example embodiment, the optical fiber is terminated with a multi-fiber Push On (MPO) connector.

In an example embodiment, the optical fiber comprises at least one of single-mode (SM) fiber, multimode (MM) fiber, MM fiber bunch, and multi-core fiber.

In an example embodiment, the electro-optical component comprises one or more of vertical-cavity surface-emitting lasers (VCSELs), indium phosphide (InP) devices, and silicon photonics (SiP) elements.

In an example embodiment, the electro-optical component comprises one or more integrated lasers.

In an example embodiment, further comprising a substrate, and wherein the processing unit and the small form factor connector are disposed on the substrate.

The In an example embodiment, the processing unit is disposed on one side of the substrate, and wherein the small form factor connector is disposed on a same one side of the substrate and is located next or near to the processing unit.

In an example embodiment, the processing unit is disposed on a one side of the substrate, and wherein the small form factor connector is disposed on an opposite side of the substrate.

In an example embodiment, the small form factor connector extends underneath the processing unit.

In an example embodiment, one or both of the electro-optical component and a fiber connector that engages the electro-optical component are configured to utilize an electro-optical (E/O) array having a two-dimensional (2D) layout.

In an example embodiment, the two-dimensional (2D) layout comprises one of a 2D aligned rectangular layout, a 2D staggered rectangular layout, and a 2D staggered circular (or hexagonal) layout.

In an example embodiment, the small form factor connector comprises an electrical pluggable connector configured to engage the processing unit in removable manner.

In an example embodiment, the small form factor connector comprises an electrical connector configured to engage the multi-lane cable by clamping down.

In an example embodiment, the processing unit comprises a graphics processing unit (GPU) or an application-specific integrated circuit (ASIC).

In an example embodiment, the system comprises a co-packaged optics (CPO) system or a near-packaged optics (NPO) system.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

As utilized herein the terms "circuits" and "circuitry" refer to physical electronic components (e.g., hardware), and any software and/or firmware ("code") that may configure the hardware, be executed by the hardware, and or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may, for example, operate on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic component (e.g., hardware) and any software and/or firmware ("code") that may configure the hardware, be executed by the hardware, and or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not enabled (e.g., by a user-configurable setting, factory trim, etc.).

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various embodiments in accordance with the present invention may be realized in hardware, software, or a combination of hardware and software. The present invention may be realized in a centralized fashion in at least one computing system, or in a distributed fashion where different elements are spread across several interconnected computing systems. Any kind of computing system or other apparatus adapted for carrying out the methods described herein is suited. A typical implementation may comprise one or more application specific integrated circuit (ASIC), one or more field programmable gate array (FPGA), and/or one or more processor (e.g., x86, x64, ARM, PIC, and/or any other suitable processor architecture) and associated supporting circuitry (e.g., storage, DRAM, FLASH, bus interface circuits, etc.). Each discrete ASIC, FPGA, Processor, or other circuit may be referred to as "chip," and multiple such circuits may be referred to as a "chipset." Another implementation may comprise a non-transitory machine-readable (e.g., computer readable) medium (e.g., FLASH drive, optical disk, magnetic storage disk, or the like) having stored thereon one or more lines of code that, when executed by a machine, cause the machine to perform processes as described in this disclosure. Another implementation may comprise a non-transitory machine-readable (e.g., computer readable) medium (e.g., FLASH drive, optical disk, magnetic storage disk, or the like) having stored thereon one or more lines of code that, when executed by a machine, cause the machine to be configured (e.g., to load software and/or firmware into its circuits) to operate as a system described in this disclosure.

Various embodiments in accordance with the present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present methods and/or systems have been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present methods and/or systems are not limited to the particular implementations disclosed, but that the present method and/or system will include all implementations falling within the scope of the appended claims.

## Claims

1. A system comprising:
one or more active electro-optical cable assemblies, wherein each active electro-optical cable assembly comprises:
a small form factor connector configured to engage a processing unit;
a multi-lane cable configured for carrying a plurality of electrical signals; and
an electro-optical component configured to convert the plurality of electrical signals to optical signals;
wherein the multi-lane cable is connected at one end to the small form factor connector and to the electro-optical component on the other end; and
wherein the electro-optical component is connected to an optical fiber for coupling the optical signals to the optical fiber.

2. The system of claim 1, wherein a multi-lane cable comprises a multi-lane copper cable array.

3. The system of claim 1, wherein each active electro-optical cable assembly further comprises a fiber connector configured for connecting the electro-optical component to the optical fiber.

4. The system of claim 1, wherein the electro-optical component is connected to the optical fiber using a parallel optics configuration.

5. The system of claim 1, wherein the electro-optical component is connected to the optical fiber using a wavelength-division multiplexing (WDM) optics configuration.

6. The system of claim 1, wherein the system comprises, at least, a first active electro-optical cable assembly and a second active electro-optical cable assembly,
wherein the electro-optical component in the first active electro-optical cable assembly is connected to the optical fiber using a parallel optics configuration, and
wherein the electro-optical component in the second active electro-optical cable assembly is connected to the optical fiber using a wavelength-division multiplexing (WDM) optics configuration.

7. The system of claim 1, wherein the optical fiber is terminated with a multi-fiber push on (MPO) connector.

8. The system of claim 1, wherein the optical fiber comprises at least one of single-mode (SM) fiber, multimode (MM) fiber, MM fiber bunch, and multi-core fiber.

9. The system of claim 1, wherein the electro-optical component comprises one or more of vertical-cavity surface-emitting lasers (VCSELs), indium phosphide (InP) devices, and silicon photonics (SiP) elements.

10. The system of claim 1, wherein the electro-optical component comprises one or more integrated lasers.

11. The system of claim 1, further comprising a substrate, and wherein the processing unit and the small form factor connector are disposed on the substrate.

12. The system of claim 11, wherein the processing unit is disposed on one side of the substrate, and wherein the small form factor connector is disposed on a same one side of the substrate and is located next or near to the processing unit.

13. The system of claim 11, wherein the processing unit is disposed on a one side of the substrate, and wherein the small form factor connector is disposed on an opposite side of the substrate.

14. The system of claim 13, wherein the small form factor connector extends underneath the processing unit.

15. The system of claim 1, wherein one or both of the electro-optical component and a fiber connector that engages the electro-optical component are configured to utilize an electro-optical (E/O) array having a two-dimensional (2D) layout.

16. The system of claim 15, wherein the two-dimensional (2D) layout comprises one of a 2D aligned rectangular layout, a 2D staggered rectangular layout, and a 2D staggered circular (or hexagonal) layout.

17. The system of claim 1, wherein the small form factor connector comprises an electrical pluggable connector configured to engage the processing unit in removable manner.

18. The system of claim 1, wherein the small form factor connector comprises an electrical connector configured to engage the multi-lane cable by clamping down.

19. The system of claim 1, wherein the processing unit comprises a graphics processing unit (GPU) or an application-specific integrated circuit (ASIC).

20. The system of claim 1, wherein the system comprises a co-packaged optics (CPO) system or a near-packaged optics (NPO) system.
